# EUROPÄISCHE PATENTSCHRIFT

(11) **EP 3 962 766 B1**
(45) Veröffentlichungstag und Bekanntmachung des Hinweises auf die Patenterteilung: **01.05.2024**
(21) Anmeldenummer: 20735526.4
(22) Anmeldetag: 25.06.2020
(51) Int. Cl.: B60K 37/02, B60K 37/06

(54) **MILITÄRISCHES FAHRZEUG MIT HMI-GERÄT FÜR EINE EINSATZKRAFT**
MILITARY VEHICLE HAVING HMI-DEVICE FOR OPERATIONAL STAFF
VÉHICULE MILITAIRE ÉQUIPÉ D'UN APPAREIL À INTERFACE HOMME/MACHINE POUR UNE FORCE D'INTERVENTION

(30) Priorität: 27.06.2019 DE 102019117325
(43) Veröffentlichungstag der Anmeldung: 09.03.2022
(73) Patentinhaber: Rheinmetall Electronics GmbH, 28309 Bremen (DE)
(72) Erfinder: KÜCK, Corvin, 28309 Bremen (DE); PRENZEL, Oliver, 27721 Ritterhude (DE)
(74) Vertreter: Horn Kleimann Waitzhofer Schmid-Dreyer Patent- und Rechtsanwälte PartG mbB
(86) Internationale Anmeldenummer: PCT/EP2020/067898
(87) Internationale Veröffentlichungsnummer: WO 2020/260496

(56) Entgegenhaltungen:
- EP-A1- 0 993 995
- DE-A1-102008 036 155
- DE-B3-102012 101 654
- US-A- 5 781 437
- US-A1- 2009 290 019

## Beschreibung

Die vorliegende Erfindung betrifft ein militärisches Fahrzeug, insbesondere einen Panzer, mit einer Anzahl von an einer Außenhaut des Fahrzeugs angeordneten Kameras zur Aufnahme von Bildern und ein in einem Innenraum des Fahrzeugs angeordnetes und mit den Kameras koppelbares HMI-Gerät (HMI: Human-Machine-Interface) für eine Einsatzkraft.

Beispielsweise bei militärischen Fahrzeugen, wie Panzern, kommen Vorrichtungen zur Ausgabe von Bildern zum Einsatz, welche an der Außenhaut des Fahrzeugs angeordnete Kameras und zumindest einen in dem Innenraum des Fahrzeugs angeordneten Bildschirm zur Ausgabe der von den Kameras aufgenommenen Bildern aufweisen. Dabei ist eine Bildverarbeitungseinheit zwischen den Kameras und dem Bildschirm gekoppelt, welche ausgewählte Bilder aus der Menge der gekoppelten Kameras für den Bildschirm bereitstellt.

Hierzu beschreibt die DE 10 2018 106 731.3 ein militärisches Gerät, welches zum Beispiel als ein militärisches Fahrzeug ausgebildet ist. Dabei zeigt die Fig. 5 der DE 10 2018 106 731.3 einen Bildschirm für das militärische Fahrzeug. Im Rahmen dieses Bildschirms sind 20 Bedientasten angeordnet, welche mit F1 - F20 bezeichnet sind. Diesen Bedientasten sind menüspezifisch unterschiedliche Funktionen zugeordnet. Das heißt, je nach Menü oder Menüebene kann die jeweilige Bedientaste eine unterschiedliche Funktion haben.

Beispielsweise der Kommandant eines Panzers nutzt ein solches HMI-Gerät zur Bedienung der Sichtsysteme des Panzers. Wenn sich aber die den Bedientasten zugeordneten Funktionen menüspezifisch ändern, so muss der Kommandant vor einer Bedienung der Sichtsysteme die derzeitig zugeordnete Funktion der Bedientasten erfassen, um das Sichtsystem sicher bedienen zu können. Dies kostet allerdings Zeit, was im Feld einen erheblichen Nachteil bedeutet. Auch ist die visuelle Erfassung der den Bedientasten jeweils zugeordneten Funktionen durch den Kommandanten fehleranfällig. Auch eine solche Fehlerwahrscheinlichkeit bei der Erfassung der den Bedientasten zugeordneten Funktionen ist im Feld beim Einsatz des Panzers sehr nachteilig.

Das Dokument US 5 781 437 A beschreibt ein Verfahren zum Koordinieren und Steuern einer Vielzahl von Einheiten, die eine Gruppe umfassen, mit den Schritten: Bereitstellen von Karteninformationen; Bereitstellen einer Hauptbildanzeige; visuelle Anzeige von Karteninformationen, die eine Einheit umgeben, auf einer Hauptbildanzeige; Empfangen von Informationen von einer zweiten Einheit in der Gruppe bezüglich der Position der zweiten Einheit, der Ausrichtung eines Sensors, der von der zweiten Einheit getragen wird, und Daten von dem Sensor der zweiten Einheit; Überlagern der auf der Hauptbildanzeige angezeigten Diagramminformationen bezüglich (i) der Position der zweiten Einheit, der Ausrichtung des Sensors der zweiten Einheit und der Daten von dem Sensor der zweiten Einheit; und Koordinieren und Steuern der Gruppe in Abhängigkeit von der Hauptbildanzeige.

Das Dokument DE 10 2008 036155 A1 zeigt eine Bedientastenanordnung, insbesondere für ein Kraftfahrzeug, umfassend eine Bedientaste mit einer Oberfläche und einen Drucksensor. Dabei ist ein Aktuator zur Erzeugung einer haptischen Reaktion bei Betätigung einer Bedientaste angeordnet.

Das Dokument EP 0 993 995 A1 beschreibt ein Multifunktionsbedienelement für Kraftfahrzeuge, mit einem Bildschirm sowie randseitig am Bildschirm angeordnete Bedientasten, wobei die Bedientasten ausschließlich randseitig am Bildschirm angeordnet sind und die randseitig angeordneten Bedientasten optisch auf den Bildschirm, als in denselben optisch hinein fortgesetzt dargestellt werden, und wobei die Bedientasten Softkeytasten sind, denen auf dem Bildschirm die jeweils zugeordneten Funktionen als in Tastennähe generierte Funktionssymbole anzeigbar sind.

Das Dokument DE 10 2012 101654 B3 zeigt ein militärisches Fahrzeug mit einer fernbedienbaren Waffe und mit einem Führungsinformationssystem zum Empfangen und/oder Senden militärischer Führungsdaten, das einen Arbeitsplatz mit einer gemeinsamen Bedienvorrichtung zur Bedienung des Führungsinformationssystems und der Waffe aufweist.

Vor diesem Hintergrund besteht eine Aufgabe der vorliegenden Erfindung darin, ein verbessertes militärisches Fahrzeug mit einem HMI-Gerät zu schaffen.

Die Aufgabe wird durch den Gegenstand des Anspruchs 1 gelöst.

Demgemäß wird ein militärisches Fahrzeug, insbesondere ein Panzer, vorgeschlagen, welches eine Anzahl von an einer Außenhaut des Fahrzeugs angeordneten Kameras zur Aufnahme von Bildern und ein in einem Innenraum des Fahrzeugs angeordnetes und mit den Kameras koppelbares HMI-Gerät (HMI: Human-Machine-Interface) für eine Einsatzkraft aufweist. Dabei weist das HMI-Gerät auf:
einen Bildschirm mit einer Mehrzahl von Anzeigebereichen zumindest umfassend einen ersten Anzeigebereich zur Anzeige eines mittels zumindest eines Teils der Kameras bereitgestellten Sichtbereichs und einen zweiten Anzeigebereich zur Anzeige eines aktuell ausgewählten Menüs,
eine Mehrzahl von physikalischen Bedientasten, wobei die jeweilige Bedientaste ein Icon zur visuellen Angabe der der Bedientaste zugeordneten Funktion aufweist und wobei die Bedientasten in einem Rahmen um die Anzeigebereiche gemäß ihren zugeordneten Funktionen in mehreren unterschiedlichen Funktionsgruppen gruppiert angeordnet sind,
eine Hintergrundbeleuchtung für die Bedientasten, und
eine Steuereinheit, welche dazu eingerichtet ist, die Hintergrundbeleuchtung derart zu steuern, dass die Bedientasten in Abhängigkeit ihres jeweiligen Status unterschiedlich beleuchtet werden.

Das militärische Fahrzeug ist insbesondere ein Panzer. Der Panzer kann als Kettenpanzer oder als Radpanzer ausgebildet sein.

Das HMI-Gerät kann auch als Schnittstellengerät, Mensch-Maschine-Schnittstelle, Mensch-Maschine-Interface, Human-Machine-Interface, Eingabegerät oder Bediengerät bezeichnet werden. Das HMI-Gerät ist zur Bedienung und/oder Steuerung des militärischen Fahrzeugs oder zumindest eines Teils des militärischen Fahrzeugs, wie beispielsweise der Sichtsysteme, eingerichtet.

Vorzugsweise umfasst das militärische Fahrzeug eine Mehrzahl von HMI-Geräten, wobei beispielsweise ein erstes der HMI-Geräte einem Richtschützen des militärischen Fahrzeugs und ein zweites der HMI-Geräte einem Kommandanten des militärischen Fahrzeugs zugeordnet ist. Die beiden HMI-Geräte sind insbesondere kommunikationstechnisch zum Austausch von Daten gekoppelt. Beispielsweise kann hierdurch der Kommandant mittels seines HMI-Geräts Ziele an das HMI-Gerät des Richtschützen zuweisen.

Durch die geordnete Anordnung der Bedientasten gemäß ihrer zugeordneten Funktionen in die mehreren unterschiedlichen Funktionsgruppen und durch die Verwendung der Hintergrundbeleuchtung zur differenzierten Beleuchtung der Bedientasten gemäß ihrer jeweiligen Status ist das vorliegende HMI-Gerät intuitiver in seiner Bedienung, wodurch wiederum die Bedienbarkeit des militärischen Fahrzeugs verbessert ist.

Dabei sind die unterschiedlichen Funktionsgruppen insbesondere logisch unterschiedliche Funktionsgruppen. So kann beispielsweise eine erste Funktionsgruppe für Video- und Spezialfunktionen, eine zweite Funktionsgruppe für Nachrichten-bezogene Funktionen, eine dritte Funktionsgruppe für Menü-bezogene Funktionen, eine vierte Funktionsgruppe für GVA Funktionsbereiche (Defence Standard 23-09, Part 2, Generic Vehicle Architecture (GVA)) und eine fünfte Funktionsgruppe für Bildschirm-bezogene Funktionen vorgesehen sein. Insbesondere sind die Bedientasten dieser Funktionsgruppen fest einer Funktion, insbesondere in jedem Menü, zugeordnet. Diese Zuordnung ist insbesondere eineindeutig. Eine sechste Gruppe von Tasten stellen vorzugsweise die rekonfigurierbaren F-Tasten gemäß GVA dar.

Durch die logische Zuordnung der Bedientasten zu den zugehörigen Funktionsgruppen, die örtliche Anordnung der Funktionsgruppen in dem Rahmen um die Anzeigebereiche und durch die differenzierte Beleuchtung der Bedientasten ist die intuitive Benutzung des vorliegenden HMI-Geräts deutlich verbessert.

Die jeweilige Kamera kann beispielsweise als Videokamera, als Tagsichtkamera, als Wärmebildkamera, als Infrarot-Kamera oder als Fotokamera ausgebildet sein. Insbesondere können die Kameras unterschiedliche Kameratypen umfassen.

Der Bildschirm kann beispielsweise als ein in dem Fahrzeuginnenraum des militärischen Fahrzeugs angeordneter Flachbildschirm ausgebildet sein. Der Flachbildschirm ist vorzugsweise ein Touchscreen. Der Bildschirm kann auch als Monitor bezeichnet werden.

Gemäß einer Ausführungsform ist das HMI-Gerät ein mit dem GVA-Standard (Defence Standard 23-09, Part 2, Generic Vehicle Architecture (GVA), Human Machine Interface) kompatibles HMI-Gerät. Das vorliegende HMI-Gerät erfüllt die in dem GVA-Standard beschriebenen Anforderungen oder ist mit diesen kompatibel.

Erfindungsgemäß ist die Steuereinheit dazu eingerichtet, die Hintergrundbeleuchtung derart zu steuern, dass die Bedientasten in Abhängigkeit ihres jeweiligen Status farblich unterschiedlich beleuchtet werden. Durch die farbliche Unterschiedlichkeit kann die Einsatzkraft die verschiedenen Status der verschiedenen Bedientasten einfach visuell differenzieren.

Erfindungsgemäß ist die jeweilige Bedientaste dazu geeignet, einen von drei unterschiedlichen Status umfassend einen ersten Status "ausgewählt", einen zweiten Status "verfügbar" und einen dritten Status "nicht verfügbar" anzunehmen.

Je nach Bedienkontext und Systemzustand ist eine Bedientaste "verfügbar" oder "nicht verfügbar". Eine von der Einsatzkraft ausgewählte Bedientaste wechselt von dem Status "verfügbar" in den Status "ausgewählt". Insbesondere werden diese drei verschiedenen Status durch die Hintergrundbeleuchtung für die Einsatzkraft unterschiedlich beleuchtet und sind damit für die Einsatzkraft visuell differenzierbar.

Gemäß einer weiteren Ausführungsform ist die Steuereinheit dazu eingerichtet, die Hintergrundbeleuchtung derart zu steuern, dass diejenigen Bedientasten in dem ersten Status (verfügbar) in der Farbe Weiß, diejenigen Bedientasten in dem zweiten Status (nicht verfügbar) nicht leuchten.

Erfindungsgemäß ist die Steuereinheit dazu eingerichtet, die Hintergrundbeleuchtung derart zu steuern, dass diejenigen Bedientasten in dem ersten Status in einer ersten Farbe, diejenigen Bedientasten in dem zweiten Status in einer zweiten Farbe und diejenigen Bedientasten in dem dritten Status in einer dritten konfigurierbare Auswahlfarbe, z.B. blau, leuchten.

Gemäß einer weiteren Ausführungsform ist die Steuereinheit dazu eingerichtet, die Hintergrundbeleuchtung derart zu steuern, dass diejenigen Bedientasten in dem ersten Status in einer ersten Farbe leuchten, diejenigen Bedientasten in dem zweiten Status in einer zweiten Farbe leuchten und die diejenigen Tasten in dem dritten Status nicht leuchten.

Gemäß einer weiteren Ausführungsform ist der Bildschirm als ein Touchscreen mit einem Wide-Screen-Format (bspw. 16:9) ausgebildet.

Gemäß einer weiteren Ausführungsform sind die Funktionsgruppen räumlich voneinander versetzt in dem Rahmen angeordnet. Die Funktionsgruppen sind vorzugsweise logisch unterschiedliche Funktionsgruppen und können aufgrund ihrer räumlichen versetzten Anordnung von der Einsatzkraft auf einen Blick leicht differenziert werden. Ferner sind die Tasten innerhalb der Funktionsgruppen vorzugsweise ebenfalls logisch angeordnet.

Gemäß einer weiteren Ausführungsform besteht ein Abstand zwischen oberem Rand des Anzeigebereichs und dem oberen Rand der seitlichen Tastenreihen, um im oberen Anzeigebereich Anzeigeelemente unterbringen zu können, die nicht den Tasten zugeordnet sind. Ebenso besteht ein Abstand zwischen unterem Rand des Anzeigebereichs und dem unteren Rand der seitlichen Tastenreihen, um im unteren Anzeigebereich Anzeigeelemente unterbringen zu können, die nicht den Tasten zugeordnet sind.

Gemäß einer weiteren Ausführungsform umfassen die Funktionsgruppen:
eine erste Funktionsgruppe für Video- und Spezialfunktionen, eine zweite Funktionsgruppe für Nachrichten-bezogene Funktionen und eine dritte Funktionsgruppe für Menü-bezogene Funktionen in einer unteren Rahmenleiste des Rahmens,
eine vierte Funktionsgruppe für GVA Funktionsbereiche und eine fünfte Funktionsgruppe für Bildschirm-bezogene Funktionen in einer oberen Rahmenleiste des Rahmens,
eine Anzahl von ersten Funktions-Tasten in einer linke Rahmenleiste des Rahmens und
eine Anzahl von zweiten Funktions-Tasten in einer rechten Rahmenleiste des Rahmens.

Gemäß einer weiteren Ausführungsform umfasst die erste Funktionsgruppe eine Bedientaste zum Ein- und Ausschalten eines Panorama-Streifens und/oder zum Umschalten zwischen mehreren Panorama-Streifen und eine Bedientaste zum Umschalten zwischen mehreren der Kameras zur Anzeige des Haupt-Videos.

Gemäß einer weiteren Ausführungsform weist das HMI-Gerät eine Gesten-Erkennung, beispielsweise Hand-Gesten, Touch-Screen-Gesten und dergleichen, zur Eingabe von Benutzerbefehlen mittels Gesten auf.

Durch die Gestenerkennung wird vorteilhafterweise eine weitere Eingabemodalität bereitgestellt, welche insbesondere in einem Innenraum eines Panzers besonders vorteilhaft ist.

Gemäß einer weiteren Ausführungsform weist das HMI-Gerät eine Sprach-Erkennung zur Eingabe von Benutzerbefehlen der Einsatzkraft mittels Sprache auf.

Die jeweilige Einheit, zum Beispiel die Steuereinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder FPGA ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegte Figur näher erläutert.
- Fig. 1: zeigt eine schematische Ansicht eines Ausführungsbeispiels eines militärischen Fahrzeugs mit einem HMI-Gerät;
- Fig. 2: zeigt eine schematische Ansicht einer Ausführungsform des HMI-Geräts für das militärische Fahrzeug nach Fig. 1; und
- Fig. 3: zeigt eine schematische Ansicht der Ausführungsform des HMI-Geräts nach Fig. 2 im Betrieb.

In den Figuren sind gleiche oder funktionsgleiche Elemente mit denselben Bezugszeichen versehen worden, sofern nichts anderes angegeben ist.

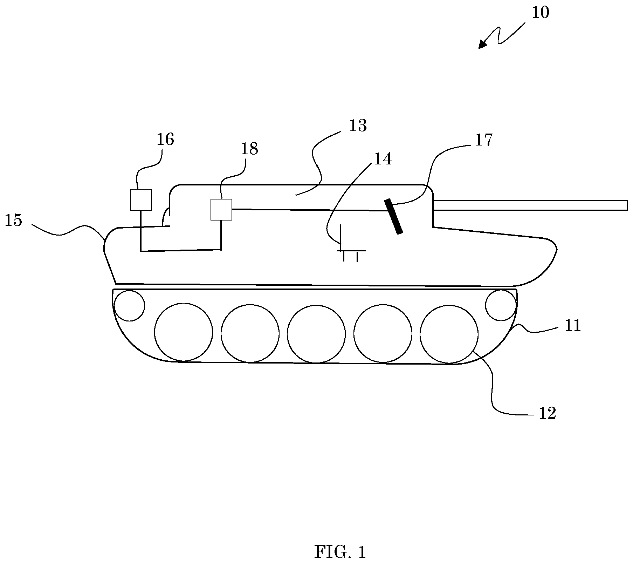

In Fig. 1 ist eine schematische Ansicht eines Ausführungsbeispiels eines militärischen Fahrzeugs 10 mit einem HMI-Gerät 17 dargestellt.

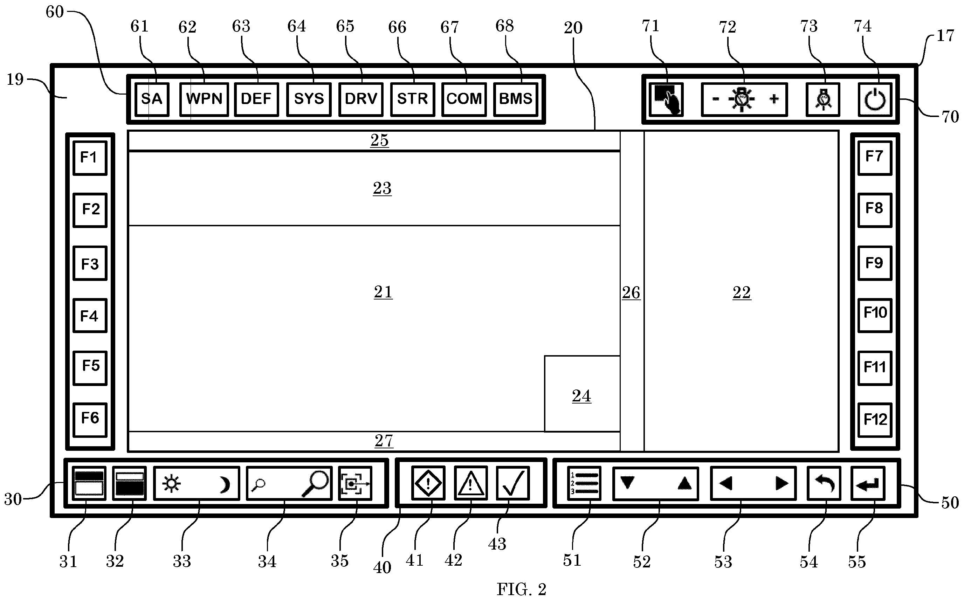

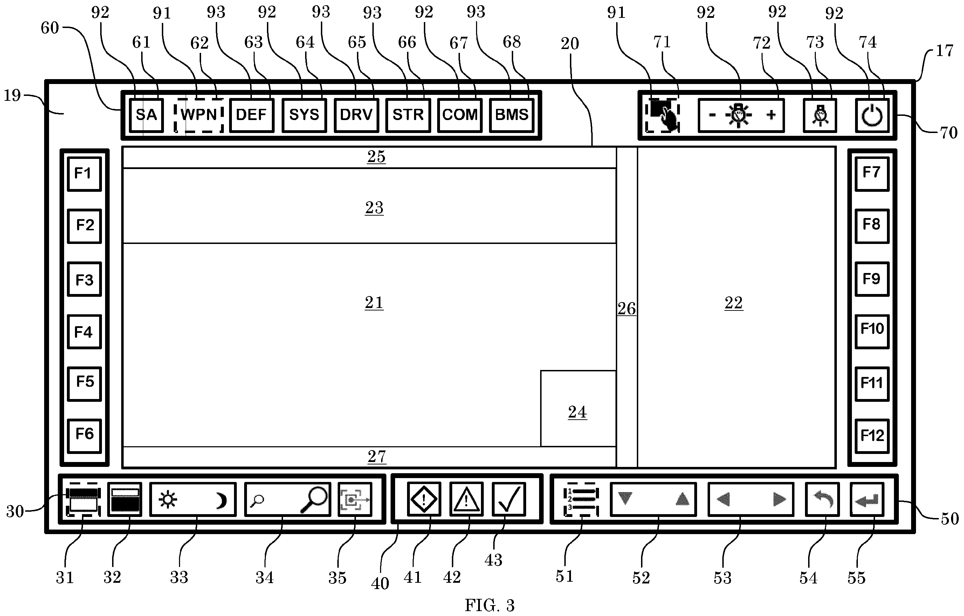

Das Ausführungsbeispiel der Fig. 1 wird unter Bezugnahme auf die Fig. 2 und 3 diskutiert. Dabei zeigt die Fig. 2 eine schematische Ansicht einer Ausführungsform des HMI-Geräts 17 im ausgeschalteten Zustand, wohingegen die Fig. 3 das HMI-Gerät 17 nach Fig. 2 im Betrieb zeigt.

In dem Beispiel der Fig. 1 ist das militärische Fahrzeug 10 ein Kettenpanzer, welcher eine Plattform 11 mit einem Kettenantrieb 12 aufweist. Auf der Plattform 11 des Kettenpanzers 10 ist ein Innenraum 13 angeordnet, in welchem Einsatzkräfte des Kettenpanzers 10 Platz finden. Entsprechend ist in dem Innenraum 13 eine Anzahl von Sitzen 14 für Einsatzkräfte des Kettenpanzers 10 angeordnet. Ohne Einschränkung der Allgemeinheit zeigt das Beispiel der Fig. 1 einen Sitz 14 für eine Einsatzkraft, welche beispielsweise die Sichtsysteme des Kettenpanzers 10 bedient.

An der Außenhaut 15 des Kettenpanzers 10 ist eine Anzahl von Kameras 16 zur Aufnahme von Bildern angeordnet. Ohne Einschränkung der Allgemeinheit zeigt Fig. 1 dabei eine Kamera 16.

In dem Innenraum 13 des Kettenpanzers 10 ist das HMI-Gerät 17 für die Einsatzkraft angeordnet. Das HMI-Gerät 17 ist über eine Steuereinheit 18 mit den Kameras 16 gekoppelt. Des Weiteren ist vorzugsweise auch eine Rechnereinheit (nicht gezeigt) vorgesehen, welche zwischen der Steuereinheit 18 und der Anzahl der Kameras 16 geschaltet ist. Das HMI-Gerät 17 ist ein mit dem GVA-Standard kompatibles Gerät und erfüllt damit Anforderungen gemäß dem GVA-Standard oder ist mit diesen kompatibel.

Aus zeichnerischen Gründen ist die Steuereinheit 18 in der Fig. 1 extern zu dem HMI-Gerät 17 gezeichnet. Alternativ und bevorzugt ist die Steuereinheit 18 in dem HMI-Gerät 17 integriert oder verteilt angeordnet.

Das HMI-Gerät 17 hat, unter Bezugnahme auf die Fig. 2 und 3, einen Bildschirm 20, eine Mehrzahl von physikalischen Bedientasten 31-35; 41-43; 51-55; 61-68; 71-74, eine Hintergrundbeleuchtung (wird im Folgenden unter Bezugnahme auf Fig. 3 detailliert erläutert) für die Bedientasten 31-35; 41-43; 51-55; 61-68; 71-74 und die Steuereinheit 18 (siehe Fig. 1).

Der Bildschirm 20 hat eine Mehrzahl von Anzeigebereichen 21-22. Gemäß der Fig. 2 und 3 umfasst diese Mehrzahl von Anzeigebereichen 21-22 einen ersten Anzeigebereich 21 zur Anzeige eines mittels zumindest eines Teils der Kameras 16 bereitgestellten Sichtbereichs und einen zweiten Anzeigebereich 22 zur Anzeige eines aktuell von der Einsatzkraft ausgewählten Menüs zur Steuerung des HMI-Geräts 17 und/oder des Kettenpanzers 10 oder Teilen des Kettenpanzers 10, wie beispielsweise der Waffe.

Der Bildschirm 20 ist insbesondere als ein Touchscreen mit Wide-Screen-Format (bspw. 16:9) ausgebildet.

In einem Rahmen 19 (siehe Fig. 2 und 3) um den Bildschirm 20 sind die physikalischen Bedientasten 31-35; 41-43; 51-55; 61-68; 71-74 angeordnet. Die jeweilige Bedientaste 31-35; 41-43; 51-55; 61-68; 71-74 hat ein Icon zur visuellen Angabe der der Bedientaste 31-35; 41-43; 51-55; 61-68; 71-74 zugeordneten Funktion.

Die Bedientasten 31-35; 41-43; 51-55; 61-68; 71-74 sind in dem Rahmen 19 um die Anzeigebereiche 21-22 gemäß ihren zugeordneten Funktionen in unterschiedlichen Funktionsgruppen 30-70 angeordnet.

Die Funktionsgruppen 30-70 umfassen dabei:
eine erste Funktionsgruppe 30 für Video- und Spezialfunktionen, eine zweite Funktionsgruppe 40 für Nachrichten-bezogene Funktionen und eine dritte Funktionsgruppe 50 für Menü-bezogene Funktionen in einer unteren Rahmenleiste des Rahmens 19,
eine vierte Funktionsgruppe 60 für GVA Funktionsbereiche und eine fünfte Funktionsgruppe 70 für Bildschirm-bezogene Funktionen in einer oberen Rahmenleiste des Rahmens 19,
eine Anzahl von ersten Funktions-Tasten F1-F6 in einer linken Rahmenleiste des Rahmens 19, und
eine Anzahl von zweiten Funktions-Tasten F7-F12 in einer rechten Rahmenleiste des Rahmens 19.

Wie oben bereits ausgeführt, hat das HMI-Gerät 17 eine Hintergrundbeleuchtung, welche mittels der Steuereinheit 18 steuerbar ist und deren Funktion mit Blick auf die Fig. 3 deutlich wird.

Aus Gründen der Übersichtlichkeit werden hierbei in der Fig. 3 nur die Bedientasten der vierten Funktionsgruppe 60 und der fünften Funktionsgruppe 70 betrachtet, welche in der oberen Rahmenleiste des Rahmens 19 angeordnet sind.

Dabei ist jede der Bedientasten 31-35; 41-43; 51-55; 61-68; 71-74 dazu geeignet, einen von drei unterschiedlichen Status, umfassend einen ersten Status "verfügbar", einen zweiten Status "nicht verfügbar" und einen dritten Status "ausgewählt", anzunehmen.

Für die Hintergrundbeleuchtung sind hierbei die Bezugszeichen 91 für den ersten Status "verfügbar ", das Bezugszeichen 92 für den zweiten Status "nicht verfügbar" und das Bezugszeichen 93 für den dritten Status "ausgewählt" verwendet.

Der erste Status 91 "verfügbar" wird in der Fig. 3 durch einen durchgehenden schwarzen Rahmen der Bedientaste, siehe die Bedientasten 61, 64, 67 und 72-74 in der oberen Rahmenleiste des Rahmens 19, illustriert und im Realen durch die Hintergrundbeleuchtung mit der Farbe Weiß ausgeführt.

Der zweite Status 92 "nicht verfügbar" wird in der Fig. 3 durch einen durchgehenden grauen Rahmen der Bedientaste, siehe die Bedientasten 63, 65, 66, 68 in der oberen Rahmenleiste des Rahmens 19, illustriert und im Realen durch eine deaktivierte Hintergrundbeleuchtung ausgeführt. Dabei beleuchtet die Hintergrundbeleuchtung vorzugsweise die Icons der Bedientasten 63 ,65, 66, 68in dem zweiten Status 92 nicht.

Der dritte Status 93 "ausgewählt" wird in der Fig. 3 durch einen gestrichelten Rahmen der Bedientaste, siehe die Bedientasten 62 und 71 in der oberen Rahmenleiste des Rahmens 19, illustriert und im Realen durch die konfigurierbare Hintergrundbeleuchtung, z.B. mit der Farbe Blau, ausgeführt.

Hierbei steuert die Steuereinheit 18 die Hintergrundbeleuchtung 91, 92, 93 entsprechend an.

Allgemein ist die Steuereinheit 18 damit dazu eingerichtet, die Hintergrundbeleuchtung 91, 92, 93 derart anzusteuern, dass die Bedientasten 31-35; 41-43; 51-55; 61-68; 71-74, F1-F12 in Abhängigkeit ihres jeweiligen Status "verfügbar", "nicht verfügbar" und "ausgewählt" farblich unterschiedlich beleuchtet werden.

Durch die logische Zuordnung der Bedientasten 31-35; 41-43; 51-55; 61-68; 71-74 zu den zugehörigen Funktionsgruppen 30-70, die örtliche Anordnung der Funktionsgruppen 30-70 in dem Rahmen 19 um die Anzeigebereiche 21-22 und durch die differenzierte Beleuchtung 91, 92, 93 der Bedientasten 31-35; 41-43; 51-55; 61-68; 71-74, F1-F12 ist die intuitive Benutzung des vorliegenden HMI-Geräts 17 und damit die Bedienung der Sichtsysteme bzw. des Kettenpanzers 10 deutlich verbessert.

Obwohl die vorliegende Erfindung anhand von Ausführungsbeispielen beschrieben wurde, ist sie vielfältig modifizierbar.

### BEZUGSZEICHENLISTE

- 10: Fahrzeug
- 11: Plattform
- 12: Antrieb
- 13: Innenraum
- 14: Sitz
- 15: Außenhaut
- 16: Kamera
- 17: HMI-Gerät
- 18: Steuereinheit
- 19: Rahmen
- 20: Bildschirm
- 21: erster Anzeigebereich (Haupt-Video)
- 22: zweiter Anzeigebereich (Menü)
- 30: erste Funktionsgruppe
- 31 - 35: Bedientasten der ersten Funktionsgruppe
- 40: zweite Funktionsgruppe
- 41 - 43: Bedientasten der zweiten Funktionsgruppe
- 50: dritte Funktionsgruppe
- 51 - 55: Bedientasten der dritten Funktionsgruppe
- 60: vierte Funktionsgruppe
- 61 - 68: Bedientasten der vierten Funktionsgruppe
- 70: fünfte Funktionsgruppe
- 71 - 74: Bedientasten der fünften Funktionsgruppe
- F1 - F12: Funktionstasten

## Patentansprüche

1. Militärisches Fahrzeug (10), insbesondere Panzer, mit:
einer Anzahl von an einer Außenhaut (15) des Fahrzeugs (10) angeordneten Kameras (16) zur Aufnahme von Bildern,
einem in einem Innenraum (13) des Fahrzeugs (10) angeordneten und mit den Kameras (16) koppelbaren HMI-Gerät (17) für eine Einsatzkraft, welches aufweist:
einen Bildschirm (20) mit einer Mehrzahl von Anzeigebereichen (21, 22) zumindest umfassend einen ersten Anzeigebereich (21) zur Anzeige eines mittels zumindest eines Teils der Kameras (16) bereitgestellten Sichtbereichs und einen zweiten Anzeigebereich (22) zur Anzeige eines aktuell ausgewählten Menüs,
eine Mehrzahl von physikalischen Bedientasten (31-35; 41-43; 51-55; 61-68; 71-74), wobei die jeweilige Bedientaste (31-35; 41-43; 51-55; 61-68; 71-74) ein Icon zur visuellen Angabe der der Bedientaste (31-35; 41-43; 51-55; 61-68; 71-74) zugeordneten Funktion aufweist und wobei die Bedientasten (31-35; 41-43; 51-55; 61-68; 71-74) in einem Rahmen (19) um die Anzeigebereiche (21, 22) gemäß ihren zugeordneten Funktionen in mehreren unterschiedlichen Funktionsgruppen (30-70) gruppiert angeordnet sind,
eine Hintergrundbeleuchtung (91, 92, 93) für die Bedientasten (31-35; 41-43; 51-55; 61-68; 71-74), und
eine Steuereinheit (18), **dadurch gekennzeichnet, dass** die jeweilige Bedientaste (31-35; 41-43; 51-55; 61-68; 71-74) dazu geeignet ist, einen von drei unterschiedlichen Status umfassend einen ersten Status "verfügbar", einen zweiten Status "nicht verfügbar" und einen dritten Status "ausgewählt" anzunehmen; und
die Steuereinheit dazu eingerichtet ist, die Hintergrundbeleuchtung (91, 92, 93) derart zu steuern, dass die Bedientasten (31-35; 41-43; 51-55; 61-68; 71-74) in Abhängigkeit ihres jeweiligen Status derart unterschiedlich beleuchtet werden, dass diejenigen Bedientasten in dem ersten Status in einer ersten Farbe (91), diejenigen Bedientasten in dem zweiten Status (92) in einer zweiten Farbe und diejenigen Bedientasten in dem dritten Status in einer dritten konfigurierbare Auswahlfarbe (93), insbesondere blau, leuchten.

2. Militärisches Fahrzeug nach Anspruch 1,
**dadurch gekennzeichnet,**
**dass** das HMI-Gerät (17) ein mit dem GVA-Standard kompatibles HMI-Gerät ist.

3. Militärisches Fahrzeug nach einem der Ansprüche 1 bis 2,
**dadurch gekennzeichnet,**
**dass** die Steuereinheit (18) dazu eingerichtet ist, die Hintergrundbeleuchtung (91, 92, 93) derart zu steuern, dass diejenigen Bedientasten in dem ersten Status in der Farbe Weiß und diejenigen Bedientasten in dem zweiten Status nicht leuchten.

4. Militärisches Fahrzeug nach einem der Ansprüche 1 bis 3,
**dadurch gekennzeichnet,**
**dass** der Bildschirm (20) als ein Touchscreen mit einem Wide-Screen-Format ausgebildet ist.

5. Militärisches Fahrzeug nach einem der Ansprüche 1 bis 4,
**dadurch gekennzeichnet,**
**dass** die Funktionsgruppen (30-70) räumlich voneinander versetzt in dem Rahmen (19) angeordnet sind.

6. Militärisches Fahrzeug nach Anspruch 5,
**dadurch gekennzeichnet,**
**dass** die Funktionsgruppen (30-70) umfassen:
eine erste Funktionsgruppe (30) für Video- und Spezialfunktionen, eine zweite Funktionsgruppe (40) für Nachrichten-bezogene Funktionen und eine dritte Funktionsgruppe (50) für Menü-bezogene Funktionen in einer unteren Rahmenleiste des Rahmens (19),
eine vierte Funktionsgruppe (60) für GVA Funktionsbereiche und eine fünfte Funktionsgruppe (70) für Bildschirm-bezogene Funktionen in einer oberen Rahmenleiste des Rahmens (19),
eine Anzahl von ersten Funktions-Tasten (F1-F6) in einer linken Rahmenleiste des Rahmens (19), und
eine Anzahl von zweiten Funktions-Tasten (F7-F12) in einer rechten Rahmenleiste des Rahmens (19).

7. Militärischer Fahrzeug nach Anspruch 6,
**dadurch gekennzeichnet,**
**dass** die erste Funktionsgruppe (30) eine Bedientaste (31) zum Ein- und Ausschalten eines Panorama-Streifens (23) und/oder zum Umschalten zwischen mehreren Panorama-Streifen (23) und eine Bedientaste (32) zum Umschalten zwischen mehreren der Kameras (16) zur Anzeige des Haupt-Videos aufweist.

8. Militärisches Fahrzeug nach einem der Ansprüche 1 bis 7,
**dadurch gekennzeichnet,**
**dass** das HMI-Gerät (17) eine Gesten-Erkennung zur Eingabe von Benutzerbefehlen mittels Gesten aufweist.

9. Militärisches Fahrzeug nach einem der Ansprüche 1 bis 8,
**dadurch gekennzeichnet,**
**dass** das HMI-Gerät (17) eine Sprach-Erkennung zur Eingabe von Benutzerbefehlen mittels Sprache der Einsatzkraft aufweist.

## Claims

1. Military vehicle (10), in particular tank, comprising:
a number of cameras (16) for recording images, arranged on an outer skin (15) of the vehicle (10),
an HMI device (17) for an operator, which is arranged in an inner space (13) of the vehicle (10) and can be coupled to the cameras (16), the HMI device (17) comprising:
a screen (20) having a plurality of display areas (21, 22) at least comprising a first display area (21) for displaying a viewing area provided by means of at least some of the cameras (16) and a second display area (22) for displaying a currently selected menu,
a plurality of physical operating keys (31-35; 41-43; 51-55; 61-68; 71-74), wherein each operating key (31-35; 41-43; 51-55; 61-68; 71-74) comprises an icon for visually indicating the function assigned to the operating key (31-35; 41-43; 51-55; 61-68; 71-74), and wherein the operating keys (31-35; 41-43; 51-55; 61-68; 71-74) are arranged in a frame (19) around the display areas (21, 22), grouped in a plurality of different function groups (30-70) according to their assigned functions,
a backlight (91, 92, 93) for the operating keys (31-35; 41-43; 51-55; 61-68; 71-74), and
a control unit (18), **characterised in that**
each operating key (31-35; 41-43; 51-55; 61-68; 71-74) is suitable for assuming one of three different statuses comprising a first status "available", a second status "unavailable" and a third status "selected"; and
the control unit is configured to control the backlight (91, 92, 93) in such a way that the operating keys (31-35; 41-43; 51-55; 61-68; 71-74) are illuminated differently depending on their respective status in such a way that those operating keys in the first status light up in a first color (91), those operating keys in the second status light up in a second color (92) and those operating keys in the third status light up in a third configurable selection color (93), in particular blue.

2. Military vehicle according to claim 1,
**characterised in that**
the HMI device (17) is an HMI device compatible with the GVA standard.

3. Military vehicle according to one of claims 1 to 2,
**characterised in that**
the control unit (18) is configured to control the backlight (91, 92, 93) in such a way that those operating keys in the first status light up in the color white and those operating keys in the second status do not light up.

4. Military vehicle according to one of claims 1 to 3,
**characterised in that**
the screen (20) is configured as a touchscreen having a wide-screen format.

5. Military vehicle according to one of claims 1 to 4,
**characterised in that**
the function groups (30-70) are arranged spatially offset from one another in the frame (19).

6. Military vehicle according to claim 5,
**characterised in that**
the function groups (30-70) comprise:
a first function group (30) for video and special functions, a second function group (40) for message-related functions and a third function group (50) for menu-related functions in a lower frame bar of the frame (19),
a fourth function group (60) for GVA function areas and a fifth function group (70) for screen-related functions in an upper frame bar of the frame (19),
a number of first function keys (F1-F6) in a left frame bar of the frame (19), and
a number of second function keys (F7-F12) in a right frame bar of the frame (19).

7. Military vehicle according to claim 6,
**characterised in that**
the first function group (30) comprises an operating key (31) for switching a panorama strip (23) on and off and/or for switching between a plurality of panorama strips (23) and an operating key (32) for switching between a plurality of the cameras (16) for displaying the main video.

8. Military vehicle according to one of claims 1 to 7,
**characterised in that**
the HMI device (17) comprises gesture recognition for inputting user commands by means of gestures.

9. Military vehicle according to one of claims 1 to 8,
**characterised in that**
the HMI device (17) comprises voice recognition for inputting user commands by means of voice of the operator.

## Revendications

1. Véhicule militaire (10), en particulier tank, comprenant :
un certain nombre de caméras (16) pour l'enregistrement d'images, disposées sur une peau extérieure (15) du véhicule (10),
un dispositif HMI (17) pour un opérateur, qui est disposé dans un espace intérieur (13) du véhicule (10) et peut être couplé aux caméras (16), le dispositif HMI (17) comprenant :
un écran (20) ayant une pluralité de zones d'affichage (21, 22) comprenant au moins une première zone d'affichage (21) pour afficher une zone de visualisation fournie au moyen d'au moins certaines des caméras (16) et une deuxième zone d'affichage (22) pour afficher un menu actuellement sélectionné,
une pluralité de touches de commande physiques (31-35 ; 41-43 ; 51-55 ; 61-68 ; 71-74), dans lequel chaque touche de commande (31-35 ; 41-43 ; 51-55 ; 61-68 ; 71-74) comprend une icône pour indiquer visuellement la fonction attribuée à la touche de commande (31-35 ; 41-43 ; 51-55 ; 61-68 ; 71-74), et dans lequel les touches de commande (31-35 ; 41-43 ; 51-55 ; 61-68 ; 71-74) sont disposées dans un cadre (19) autour des zones d'affichage (21, 22), groupées en une pluralité de groupes de fonctions différents (30-70) selon leurs fonctions attribuées,
un rétroéclairage (91, 92, 93) pour les touches de commande (31-35 ; 41-43 ; 51-55 ; 61-68 ; 71-74), et
une unité de commande (18), **caractérisé en ce que**
chaque touche de commande (31-35 ; 41-43 ; 51-55 ; 61-68 ; 71-74) est appropriée pour adopter l'un de trois états différents comprenant un premier état "disponible", un deuxième état "indisponible" et un troisième état "sélectionné" ; et
l'unité de commande est configurée pour commander le rétroéclairage (91, 92, 93) de telle manière que les touches de commande (31-35 ; 41-43 ; 51-55 ; 61-68 ; 71-74) sont éclairées différemment en fonction de leur état respectif de telle manière que ces touches de commande dans le premier état s'éclairent dans une première couleur (91), ces touches de commande dans le deuxième état s'éclairent dans une deuxième couleur (92) et ces touches de commande dans le troisième état s'éclairent dans une troisième couleur de sélection configurable (93), en particulier le bleu.

2. Véhicule militaire selon la revendication 1,
**caractérisé en ce que**
le dispositif HMI (17) est un dispositif HMI compatible avec la norme GVA.

3. Véhicule militaire selon l'une des revendications 1 à 2,
**caractérisé en ce que**
l'unité de commande (18) est configurée pour commander le rétroéclairage (91, 92, 93) de telle manière que ces touches de commande dans le premier état s'éclairent dans la couleur blanche et ces touches de commande dans le deuxième état ne s'éclairent pas.

4. Véhicule militaire selon l'une des revendications 1 à 3,
**caractérisé en ce que**
l'écran (20) est configuré comme un écran tactile ayant un format grand écran.

5. Véhicule militaire selon l'une des revendications 1 à 4,
**caractérisé en ce que**
les groupes de fonctions (30-70) sont disposés spatialement décalés les uns des autres dans le cadre (19).

6. Véhicule militaire selon la revendication 5,
**caractérisé en ce que**
les groupes de fonctions (30-70) comprennent :
un premier groupe de fonctions (30) pour des fonctions vidéo et spéciales, un deuxième groupe de fonctions (40) pour des fonctions liées à un message et un troisième groupe de fonctions (50) pour des fonctions liées à un menu dans une barre de cadre inférieure du cadre (19),
un quatrième groupe de fonctions (60) pour des zones de fonctions GVA et un cinquième groupe de fonctions (70) pour des fonctions liées à un écran dans une barre de cadre supérieure du cadre (19),
un certain nombre de premières touches de fonction (F1-F6) dans une barre de cadre gauche du cadre (19), et
un certain nombre de deuxièmes touches de fonction (F7-F12) dans une barre de cadre droite du cadre (19).

7. Véhicule militaire selon la revendication 6,
**caractérisé en ce que**
le premier groupe de fonctions (30) comprend une touche de commande (31) pour activer et désactiver une bande panoramique (23) et/ou pour commuter entre une pluralité de bandes panoramiques (23) et une touche de commande (32) pour commuter entre une pluralité des caméras (16) pour afficher la vidéo principale.

8. Véhicule militaire selon l'une des revendications 1 à 7,
**caractérisé en ce que**
le dispositif HMI (17) comprend une reconnaissance de gestes pour entrer des commandes d'utilisateur au moyen de gestes.

9. Véhicule militaire selon l'une des revendications 1 à 8,
**caractérisé en ce que**
le dispositif HMI (17) comprend une reconnaissance vocale pour entrer des commandes d'utilisateur au moyen de la voix de l'opérateur.
